# EUROPEAN PATENT APPLICATION

(11) **EP 2 626 826 A1**
(43) Date of publication of application: **14.08.2013**
(21) Application number: 13154496.7
(22) Date of filing: 07.02.2013
(51) Int. Cl.: G06Q 20/40, G06Q 20/32

(54) **A system and method for processing transactions**

(30) Priority: 07.02.2012 US 201213368176
(71) Applicant: Voice Commerce Group Technologies Limited, St Helier Channel Islands JE1 4HE (GB)
(72) Inventor: Ogden, Jonathan Nicholas, St Helier, Channel Islands JE1 4HE (GB)
(74) Representative: Rickard, David John

(57) **Abstract**

An electronic transaction processing system comprising an inbound payment processing module, an outbound payment processing module, an authorization module, and a data store containing financial account data relating to an entity. Wherein the authorization module is arranged to authorize processing of outbound payments by the outbound payment processing module, the financial account data defines a currency amount corresponding to working capital of the entity, inbound payments processed by the inbound payment processing module are added to said currency amount, and authorized outbound payments processed by the outbound payment processing module are removed from said currency amount.

## Description

### Field of the Invention

This invention relates to a system and method for processing transactions, and in particular to a system and method for processing financial transactions.

### Description of the related Art

Financial transactions are traditionally processed using dedicated payment current accounts. Such accounts are separate from accounts holding company working capital.

It can be difficult to make full use of the financial assets of a company using such conventional arrangements.

### Summary of the Invention

According to a first aspect the invention provides an electronic transaction processing system comprising:
an inbound payment processing module;
an outbound payment processing module;
an authorization module;
a data store containing financial account data relating to an entity;
wherein the authorization module is arranged to authorize processing of outbound payments by the outbound payment processing module;
the financial account data defines a currency amount corresponding to working capital of the entity;
inbound payments processed by the inbound payment processing module are added to said currency amount; and
authorized outbound payments processed by the outbound payment processing module are removed from said currency amount.

Preferably, the currency amount corresponding to working capital is immediately available for outbound payments.

Preferably, the authorization module comprises a biometric identity verification module, and the authorization module is arranged to authorize processing of an instructed outbound payment when the identity of the user instructing the payment is verified by the biometric identity verification module.

Preferably, the biometric identity verification module comprises a voice biometric identification module.

Preferably, the biometric identity verification module is arranged to identify a plurality of different users.

Preferably, the authorization module has a number of different user identities each stored in association with at least one of a plurality of different payment authority profile; and
the authorization module is arranged to authorize processing of an instructed outbound payment when the identity of the user instructing the payment is verified and the instructed outbound payment matches the payment authority profile associated with the verified user identity.

Preferably, the system is arranged to receive instructions to make an instructed outbound payment from at least one mobile device.

Preferably, the biometric identification module is arranged to receive biometric information from said at least one mobile device.

Preferably, the biometric identity verification module comprises a voice biometric identification module and the biometric identification module is arranged to receive voice biometric information from said at least one mobile device.

Preferably, the biometric identification module is arranged to request a user to provide voice biometric information from said at least one mobile device.

Preferably, when the system receives instructions to make an instructed outbound payment from said at least one mobile device, the biometric identification module is arranged to place a call to said at least one mobile device, the call comprising a request for a user to provide voice biometric information using said at least one mobile device.

Preferably, the request for a user to provide voice biometric information comprises a phrase to be spoken by the user.

Preferably, the biometric identification module is arranged to only accept voice biometric information provided by a user as valid if the voice biometric information comprising the phrase spoken by the user is received within a predetermined time after said request is made.

Preferably, the phrase comprises a sequence of numbers to be spoken by the user.

Preferably, the authorization module is arranged to receive location information from said at least one mobile device; and
the authorization module is arranged to authorize processing of an instructed outbound payment only when the location of said at least one mobile device is within a predetermined range of locations.

Preferably, the system further comprises a currency exchange module;
wherein the financial account data defines a currency amount in a specific currency;
the currency exchange module is arranged to convert inbound payments in another currency into said specific currency before they are added to the said currency amount; and
the currency exchange module is arranged to convert outbound payments in another currency into said specific currency before they are subtracted from the said currency amount.

Preferably, the system further comprises a banking services module providing banking services relating to said financial account data.

Preferably, the banking services module provides services selected from one or more of: loans, deposit accounts, insurance, and invoice factoring.

Preferably, the outbound payment processing module comprises an outbound transaction card payment processing module.

Preferably, the outbound transaction card payment processing module comprises an outbound credit card payment processing module.

Preferably, the currency amount corresponding to working capital is immediately available to service outbound credit card payments.

Preferably, the outbound credit card payment processing module is arranged to process payments made using credit cards issued by the entity; and
the system further comprises a credit card interface arranged to set credit limits for the credit cards issued by the entity.

Preferably, the outbound transaction card payment processing module comprises a pre-paid transaction card payment processing module.

Preferably, the pre-paid transaction card payment processing module is arranged to process payments made using pre-paid transaction cards issued by the entity; and
the system further comprises a pre-paid transaction card interface arranged to set payment limits for the pre-paid transaction cards issued by the entity.

Preferably, the inbound payment processing module comprises an inbound mobile payment processing module.

Preferably, the inbound payment processing module comprises an inbound transaction card payment processing module.

Preferably, the inbound transaction card payment processing module comprises an inbound credit card payment processing module.

Preferably, the inbound payment processing module comprises an inbound wire transfer processing module.

Preferably, the inbound payment processing module comprises an inbound debit payment processing module.

Preferably, the outbound payment processing module comprises an outbound mobile payment processing module.

Preferably, the outbound payment processing module comprises an outbound wire transfer processing module.

Preferably, the outbound payment processing module comprises an outbound debit payment processing module.

Preferably, the outbound payment processing module comprises an outbound pre-paid transaction card payment processing module arranged to process payments made using pre-paid transaction cards issued by the entity; and
the system further comprises a pre-paid transaction card interface arranged to set payment limits for the pre-paid transaction cards issued by the entity.

Preferably, the system comprises a computer and each of the modules comprises a software module.

According to a second aspect the invention provides a method of electronically processing transactions, the method comprising:
maintaining a record of financial account data relating to an entity in a data store using a data storage module;
processing inbound payments using an inbound payment module;
processing outbound payments using an outbound payment module; and
authorizing the processing of outbound payments by the outbound payment module using an authorization module;
wherein the financial account data defines a currency amount corresponding to working capital of the entity;
inbound payments processed by the inbound payment processing module are added to said currency amount by the data storage module; and
authorized outbound payments processed by the outbound payment processing module are removed from said currency amount by the data storage module.

Preferably, the currency amount corresponding to working capital is immediately available for outbound payments.

Preferably, the processing of an instructed outbound payment is authorized when the identity of the user instructing the payment is verified by a biometric identity verification module of the authorization module.

Preferably, the biometric identity verification comprises voice biometric identity verification using a voice biometric identification module of the biometric identification module.

Preferably, a plurality of different users can be identified using the biometric identity verification module.

Preferably, the authorization module has a number of different user identities each stored in association with at least one of a plurality of different payment authority profile; and
processing of an instructed outbound payment is authorized when the identity of the user instructing the payment is verified using the authorization module and the instructed outbound payment matches the payment authority profile associated with the verified user identity.

Preferably, instructions to make an instructed outbound payment may be received from at least one mobile device.

Preferably, the biometric identification module receives biometric information from said at least one mobile device.

Preferably, the biometric identity verification module comprises a voice biometric identification module and the biometric identification module receives voice biometric information from said at least one mobile device.

Preferably, the biometric identification module requests a user to provide voice biometric information from said at least one mobile device.

Preferably, when instructions are receeived to make an instructed outbound payment from said at least one mobile device, the biometric identification module places a call to said at least one mobile device, the call comprising a request for a user to provide voice biometric information using said at least one mobile device.

Preferably, the request for a user to provide voice biometric information comprises a phrase to be spoken by the user.

Preferably, the biometric identification module only accepts voice biometric information provided by a user as valid if the voice biometric information comprising the phrase spoken by the user is received within a predetermined time after said request is made.

Preferably, the phrase comprises a sequence of numbers to be spoken by the user.

Preferably, the authorization module receives location information from said at least one mobile device; and
the authorization module authorizes processing of an instructed outbound payment only when the location of said at least one mobile device is within a predetermined range of locations.

Preferably, the financial account data defines a currency amount in a specific currency; the method further comprising:
converting inbound payments in another currency into said specific currency using a currency exchange module before the inbound payments are added to the said currency amount; and
converting outbound payments in another currency into said specific currency using the currency exchange module before the outbound payments are subtracted from the said currency amount.

Preferably, the method further comprising providing banking services relating to said financial account data using a banking services module.

Preferably, services selected from one or more of: loans, deposit accounts, insurance, and invoice factoring are provided using the banking services module.

Preferably, the outbound payments comprise outbound transaction card payments processed using an outbound transaction card payment processing module.

Preferably, the outbound transaction card payments comprise outbound credit card payments processed using an outbound credit card payment processing module.

Preferably, the currency amount corresponding to working capital is immediately available to service outbound credit card payments.

Preferably, the outbound credit card payments are made using credit cards issued by the entity; and
the method further comprises setting credit limits for the credit cards issued by the entity using a credit card interface.

Preferably, the outbound transaction card payments comprise pre-paid transaction card payments processed using a pre-paid transaction card payment processing module.

Preferably, the pre-paid transaction card payments are made using pre-paid transaction cards issued by the entity; and
the method further comprises setting payment limits for the pre-paid transaction cards issued by the entity using a pre-paid transaction card interface.

Preferably, the inbound payments comprise inbound mobile payments processed using an inbound mobile payment processing module.

Preferably, the inbound payments comprise inbound transaction card payments processed using an inbound transaction card payment processing module.

Preferably, the inbound payments comprises inbound credit card payments processed using an inbound credit card payment processing module.

Preferably, the inbound payments comprise inbound wire transfer payments processed using an inbound wire transfer processing module.

Preferably, the inbound payments comprise inbound debit payments processed using an inbound debit payment processing module.

Preferably, the outbound payments comprise outbound mobile payments processed using an outbound mobile payment processing module.

Preferably, the outbound payments comprise outbound wire transfer payments processed using an outbound wire transfer processing module.

Preferably, the outbound payments comprise outgoing debit payments processed using an outbound debit payment processing module.

Preferably, the outbound payments comprise outbound pre-paid transaction card payments processed using an outbound pre-paid transaction card payment processing module arranged to process payments made using pre-paid transaction cards issued by the entity; and
the method further comprises setting payment limits for the pre-paid transaction cards issued by the entity using a pre-paid transaction card interface.

Preferably, the method is carried out using a computer and each of the modules comprises a software module.

According to a third aspect the invention provides computer program code which when run on a computer causes the computer to perform the above method.

According to a fourth aspect the invention provides a carrier medium carrying computer readable code which when run on a computer causes the computer to perform the above method.

According to a fifth aspect the invention provides a computer program product comprising the computer readable code.

According to a sixth aspect the invention provides an article of manufacture comprising:
a machine-readable storage medium; and
executable program instructions embodied in the machine readable storage medium that when executed by a programmable system causes the system to perform the function of processing transactions comprising the steps of:
   maintaining a record of financial account data relating to an entity in a data store using a data storage module;
   processing inbound payments using an inbound payment module;
   processing outbound payments using an outbound payment module; and
   authorizing the processing of outbound payments by the outbound payment module using an authorization module;
   wherein the financial account data defines a currency amount corresponding to working capital of the entity;
   inbound payments processed by the inbound payment processing module are added to said currency amount by the data storage module; and
   authorized outbound payments processed by the outbound payment processing module are removed from said currency amount by the data storage module.

The invention further provides systems, devices and articles of manufacture for implementing any of the aforementioned aspects of the invention.

### Description of Figures

The invention will now be described in detail with reference to the following figures in which:

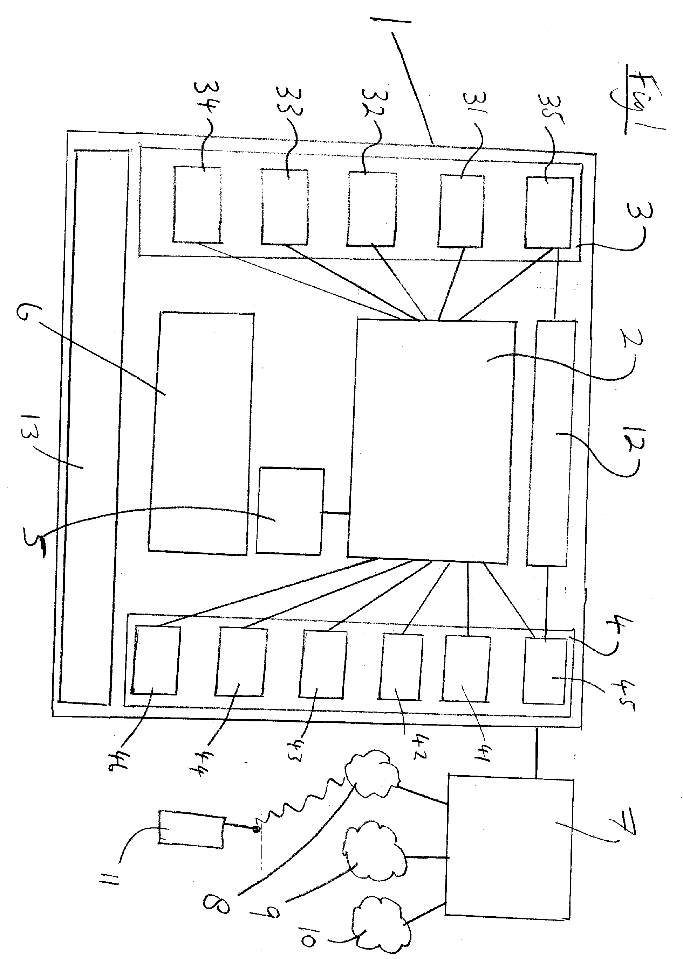

Figure 1 is a diagram of an example of a transaction processing system according to the invention.

### Detailed Description of the Invention

An example of a transaction processing method and apparatus according to the present application is illustrated in Figure 1. Figure 1 shows an exemplary transaction system 1 arranged to process transactions on behalf of an entity. In the example discussed herein the entity is a company. In some examples the entity may be some other type of legal entity. In other examples the entity may be a person.

The transaction system 1 is arranged to process financial transactions on behalf of the company. The transaction system 1 comprises a balance data storage module 2 linked to an inbound payment processing module 3 and an outbound payment processing module 4.

Although the transaction system 1 processes financial transactions on behalf of the company, the transaction system 1 will be owned and operated by a bank or approved regulated organisation providing financial services to the company. In some examples the transaction system 1 may be owned and operated by a financial institution other than a bank. In some examples ownership and operation of the transaction system 1 may be split, with the transaction system 1 being operated by a financial institution and owned by some other entity. The company is a customer of the bank. In other example there may be a different legal relationship between the company and the bank.

The transaction system 1 has an assigned banking sort code. This may allow the transaction system to be identified and interacted with in a standard manner by banks and other financial institutions. In other examples the transaction system 1 may not have an assigned sort code. In other examples the financial institution operating the transaction system 1 may have a sort code.

The transaction system 1 is provided with suitable security arrangements to ensure the confidentiality and integrity of the data within the system and to ensure that bogus commands cannot be given to the system. Suitable security arrangements are in general well known, and will not be described in detail herein.

All parts of the transaction system 1 maintain records of actions they carry out in order to allow auditing of transaction activity. Which actions are recorded and the level of detail recorded will vary in different examples.

The balance data storage module 2 controls and comprises a data store 5 which contains financial data defining a currency value of an account balance of the company. In the illustrated example the currency value is defined in US dollars. In other examples the currency value may be defined in different currencies. In some examples the currency value may be defined in pounds sterling, euro or yen.

The account balance of the company contained in the data store 5 is assigned a bank account number. This may allow the account to be identified and interacted with in a standard manner by banks and other financial institutions.

The inbound payment processing module 3 is arranged to receive and process inbound payments to the company. The inbound payment processing module 3 informs the balance data storage module 2 of the value of processed inbound payments, and the balance data storage module 2 adds the value of the processed inbound payments to the account balance stored in the data store 5. The outbound payment processing module 4 is arranged to receive instructions to make outgoing payments on behalf of the company and to process and send the outgoing payments. The outbound payment processing module 4 informs the balance data storage module 2 of the value of processed outgoing payments, and the balance data storage module 2 subtracts the value of the processed outgoing payments from the account balance stored in the data store 5.

The account balance stored in the data store 5, including processed inbound payments, is immediately available to be used to make outgoing payments.

The transaction system 1 is connected to a communication system 7. The communication system 7 provides the transaction system 1 with access to a number of different communication networks. In the illustrated example the communication system 7 allows the transaction system 1 to access the public telephone infrastructure 8 and public data networks such as the internet 9. In the illustrated example the communication system 7 also allows the transaction system 1 to have access dedicated financial data networks 10. Examples of dedicated financial data networks include SWIFT and the SEPA debit and credit payments network.

In the illustrated embodiment the communication system 7 is shown as a single system. In other examples the communications system may comprise a number of communications subsystems each providing access to different communications networks.

The transaction system 1 further includes a voice biometric verification module 6. The voice biometric verification module 6 is arranged to verify the identities of authorized users using voice biometrics, and to allow transactions to be signed using voice biometrics to provide a record of which user requested, instructed or authorized a specific transaction.

A number of voice biometric verification systems are known.

Identity verification using voice biometrics provides identity verification by comparing samples of speech from a person purporting to be a user to stored data defining features of the users speech. Based upon the results of the comparison the person is either verified or not verified as being the user they purport to be. If the comparison identifies the samples of speech as having a sufficient degree of similarity to the recorded data the person is verified as being the person they purport to be.

When the outbound payment processing module 4 receives a request to make an outgoing payment, the outbound payment processing module 4 requests the voice biometric verification module 6 to verify the identity of the person making the request, and in particular to verify that the person making the request is a person authorized to make the request. The request may, for example, be received from a mobile device 11 such as a smartphone through the communication system 7 and the public telephone infrastructure 8.

When a request to make an outgoing payment is received from a mobile device 11 the voice biometric verification module 6 initiates a telephone call to the mobile device 11 through the public telephone infrastructure 8 using the communication system 7. When the call is answered the voice biometric verification module 6 requests the person using the mobile device to speak a randomly, or pseudo randomly, selected series of four numbers within a predetermined time period. The voice biometric verification module 6 compares the response of the person using the mobile device 11 to stored data defining features of the purported users speech and the result of the comparison is compared to a threshold. If the degree of similarity equals or exceeds the threshold the voice biometric verification module 6 verifies that the person making the request is the person they are purporting to be and instructs the outbound payment processing module 4 to proceed accordingly. Otherwise, the voice biometric verification module 6 instructs the outbound payment processing module 4 not to proceed. In some examples the threshold used by the voice biometric verification module 6 may be varied based on the action requested. In some examples requests for more significant actions may use a higher threshold.

It should be noted that the outbound payment processing module 4 being instructed to proceed by the voice biometric verification module 6 does not guarantee that the requested outgoing payment will be made.

The outbound payment processing module 4 maintains a list of authorized users with each user identity stored in association with data identifying what actions each user is authorized to request. In some examples the authorization of users to take specific actions may be categorized by identifying types of actions which each user is authorized to take. In some examples the authorization of users to take specific actions may be categorized by identifying maximum transaction amounts which each user is authorized to take. In some examples the authorization of users to take specific actions may reference the user or customers approved limits under the Know Your Customer (KYC) acceptance process. In the illustrated example both types of authorization are used, with each user being authorized to carry out specified actions up to a maximum transaction amount. The maximum transaction amount for a user may be different for different types of action.

In the illustrated example a requested outgoing payment will only be processed and made by the outbound payment processing module 4 if the requested outgoing payment falls within the types of actions the verified user is authorized to request and the amount of the requested outgoing payment is equal to or less than the maximum transaction amount specified for that user.

Further, a requested transaction may not be capable of being carried out, for example if the amount of the account balance is insufficient.

If the requested outgoing payment is not made even though the identity of the requesting user is verified the outbound payment processing module 4 sends a message to the requesting user mobile device 11 using the communication system 7 and the public telephone infrastructure 8, and advising that the requested outgoing payment is not being made, and the reason why it is no being made. In other examples this message may be sent using the internet 9. In other examples this message may only state that the requested outgoing payment is not being made without giving a reason. In other examples no message may be sent.

The identity of a user is verified before checking whether the user is authorized to make the request and that the account balance is sufficient. This may make it easier to identify attempts to hack into the system and carry out unauthorized activities by third parties. In other examples the order of these actions may be reversed.

The identity of a user is verified before sending any message identifying that the requested outgoing payment is not being made. This may prevent sensitive information, for example regarding user authorizations or account balance being obtained by third parties from the messages.

Transactions may be signed by the outbound payment processing module 4 storing the identity verification from the voice biometric verification module 6 together with a record of the processing of the outgoing payment.

If the identity of the user is not verified the voice biometric verification module 6 sends a message explaining this to the mobile device 11 using the communication system 7 and the public telephone infrastructure 8. In other examples this message may be sent using the internet 9.

Having the user identity verification process start with an outgoing telephone call initiated by the system may increase security by making it harder for unauthorized users to access the system. In general it is much more difficult for a third party to redirect a call initiated by the system to a third party device instead of the intended user mobile device than it would be to make a call to the system and make it appear that the call came from the intended user mobile device.

Requiring a user to speak a series of randomly or pseudo-randomly selected numbers may make it harder to fool the system, for example by impersonation or the use of recordings, because of the very large number of possible phrases which may be requested.

Requiring a user to respond within a time limit may make it harder to fool the system, for example by impersonation or the use of recordings, by limiting the time available for practice or to assemble the requested phrase from recordings.

The inbound payment processing module 3 comprises a number of sub-modules.

The inbound payment processing module 3 comprises an inbound debit payment processing module 31. The inbound debit payment processing module 31 receives and processes inbound debit payments and informs the balance data storage module 2 of the value of processed inbound payments.

The inbound payment processing module 3 comprises an inbound wire transfer payment processing module 32. The inbound wire transfer payment processing module 32 receives and processes inbound wire transfer payments and informs the balance data storage module 2 of the value of processed inbound payments.

The inbound payment processing module 3 comprises an inbound credit card payment processing module 33. The inbound credit card payment processing module 33 receives and processes inbound credit card payments and informs the balance data storage module 2 of the value of processed inbound payments. Transactions by some transaction cards which are not credit cards in the normally accepted meaning of the term are processed by some financial institutions in the same manner as credit cards. The inbound credit card payment processing module 33 will process transactions from such transaction cards as necessary.

The inbound payment processing module 3 comprises an inbound mobile payment processing module 34. The inbound mobile payment processing module 34 receives and processes inbound mobile payments and informs the balance data storage module 2 of the value of processed inbound payments. The inbound mobile payments may be from mobile devices using systems such as Near Field Communication (NFC) or Mobile Web Payments (WAP). Other mobile payment types and technologies may also be supported.

The provision of dedicated sub-modules within the inbound payment processing module 3 may allow the efficiency and reliability of the system to be increased because each submodule can be adapted to the specific requirements of the corresponding payment type

In some examples not all of the identified sub-modules are used, some may be absent. In some examples the functions of some of different ones of the sub-modules may be combined. In some examples the functions of all of the sub-modules may be provided by a single integrated inbound payment processing module.

The outbound payment processing module 4 comprises a number of sub-modules.

The outbound payment processing module 4 comprises an outbound debit payment processing module 41. The outbound debit payment processing module 41 processes and sends outbound debit payments and informs the balance data storage module 2 of the value of processed outbound payments.

The outbound payment processing module 4 comprises an outbound wire transfer payment processing module 42. The inbound wire transfer payment processing module 42 processes and sends outbound wire transfer payments and informs the balance data storage module 2 of the value of processed outbound payments.

The outbound payment processing module 4 comprises an outbound credit card payment processing module 43. The outbound credit card payment processing module 43 processes and sends outbound credit card payments and informs the balance data storage module 2 of the value of processed outbound payments. Transactions by some transaction cards which are not credit cards in the normally accepted meaning of the term are processed by some financial institutions in the same manner as credit cards. The outbound credit card payment processing module 43 will process transactions using such transaction cards as necessary.

The outbound payment processing module 4 comprises an outbound mobile payment processing module 44. The outbound mobile payment processing module 44 processes and sends outbound mobile payments and informs the balance data storage module 2 of the value of processed outbound payments. The outbound mobile payments may be made using mobile devices using systems such as Near Field Communication (NFC) or Mobile Web Payments (WAP). Other mobile payment types and technologies may also be supported.

The outbound payment processing module 4 comprises an outbound pre-paid card payment processing module 46. The outbound pre-paid card payment processing module 46 processes and sends outbound payments to place credit onto pre-paid cards, and informs the balance data storage module 2 of the value of processed outbound payments.

The provision of dedicated sub-modules within the outbound payment processing module 4 may allow the efficiency and reliability of the system to be increased because each submodule can be adapted to the specific requirements of the corresponding payment type

In some examples not all of the identified sub-modules are used, some may be absent. In some examples the functions of some of different ones of the sub-modules may be combined. In some examples the functions of all of the sub-modules may be provided by a single integrated outbound payment processing module.

The transaction system 1 further comprises a foreign exchange module 12. The foreign exchange module 12 is arranged to process incoming and outgoing payments which are defined in foreign currencies. Foreign currencies are defined as currencies different from the currency in which the account balance stored in the data store 5 is defined. The foreign currencies are not necessarily foreign to the geographical location where the transaction system 1 is located.

When an inbound payment is received in a foreign currency and processed by the inbound payment processing module 3, the foreign exchange module 12 calculates the actual value of the inbound payment to be added to the account balance stored in the data store 5. This calculated actual value is then added to the account balance stored in the data store 5. When an outbound payment is processed and made in a foreign currency by the outbound payment processing module 4, the foreign exchange module 12 calculates the actual cost of the outbound payment to be subtracted from the account balance stored in the data store 5. This calculated actual cost is then subtracted from the account balance stored in the data store 5.

The foreign exchange module 12 calculates the actual value or actual cost of a foreign currency payment to be added to or subtracted from the account balance based on the exchange rates for buying or selling the foreign currency offered by the bank operating the system and providing financial services to the company. If necessary, this calculation takes into account any relevant charges made for the currency exchange.

The inbound payment processing module 3 comprises an inbound foreign payment processing module 35. The inbound foreign payment processing module 35 receives and processes inbound foreign currency payments, requests the actual value of the received and processed payments from the foreign exchange module 12, and informs the balance data storage module 2 of the actual value of the processed foreign currency inbound payments.

The outbound payment processing module 4 comprises an outbound foreign payment processing module 45. The outbound foreign payment processing module 45 processes and sends outbound foreign currency payments, requests the actual value of the processed and sent payments from the foreign exchange module 12, and informs the balance data storage module 2 of the actual cost of the processed foreign currency outbound payments.

In some examples the foreign exchange module 12 may directly inform the balance data storage module 2 of the actual value of the processed foreign currency inbound payments instead of this information being supplied by the inbound payment processing module 3.

In some examples the foreign exchange module 12 may directly inform the balance data storage module 2 of the actual cost of the processed foreign currency outbound payments instead of this information being supplied by the outbound payment processing module 4.

In other examples the foreign exchange module 12, inbound foreign payment processing module 35 and outbound foreign payment processing module 45 may be absent. In such examples the system will not be able to directly process foreign currency payments.

The transaction system 1 further comprises a banking services module 13. The banking services module 13 is arranged to provide further banking services additional to the processing of inbound and outbound payments. The banking services module calculates interest payments due on the account balance stored in the data store 5, and instruct the balance data storage module 2 to add the appropriate interest amount to the account balance stored in the data store 5.

The banking services module 13 is arranged to provide further banking services additional to the processing of inbound and outbound payments. The banking services module calculates interest payments due on the account balance stored in the data store 5, and instructs the balance data storage module 2 to add the appropriate interest amount to the account balance stored in the data store 5.

The banking services module 13 is arranged to provide information regarding loans, and to provide an interface to other banking systems to allow loans to be arranged.

The banking services module 13 is arranged to provide information regarding insurance, and to provide an interface to other banking systems to allow insurance to be arranged.

The banking services module 13 is arranged to provide information regarding invoice factoring, and to provide an interface to other banking systems to allow invoice factoring to be arranged.

In some examples the banking services module 13 may be arranged to provide information regarding other services, and to provide an interface to other systems to allow these other services to be arranged. The other services may for example include one or more of: revolving credit facilities and deposit accounts.

Similarly to the making of outgoing payments, the arranging of services through the banking services module 13 is also subject to identity verification of the requesting user by the voice biometric verification module 6.

In some examples the banking services module 13 may not provide all of the functions identified above.

In other examples the banking services module 13 may not be present.

The transaction system described above may provide advantages over conventional bank accounts. In particular, integrating the incoming and outgoing payment systems with the working capital of the company may provide advantages over conventional bank accounts where payment processing accounts and business bank accounts are treated separately. It may be possible to provide a transaction day zero (T0) service delivering same day in and out transactions. It may be possible to make more efficient use of the available funds of a company by making received payments immediately available for use rather than incurring the administrative overhead and delays incurred by the need to transfer funds between different accounts in conventional arrangements.

For example, in conventional banking systems it is generally necessary to contract to purchase foreign currency and place the foreign currency in a dedicated foreign currency account before foreign currency payments can be made. The present invention may allow this problem to be reduced or overcome.

For example, in conventional banking arrangements it is necessary to allocate funds to cover credit card spending, commonly by allocating an amount of funds equal to two months expected spending. As a result, the use of credit cards may result in a large amount of the company working capital being tied up by being allocated to cover the credit card spending and unavailable for other uses. The present invention may allow this problem to be reduced or overcome.

For example, in conventional banking, if it is desired to attach a credit card to a company account it is generally necessary to arrange this through an entirely separate arm or department of the bank, resulting in significant delay and administrative overhead. Further, it is generally required to allocate a large amount of the working capital to cover the spending using the credit card, typically an amount equal to two months expected spending. Further, if it is no longer desired to use the credit card, or the amount of use is reduced, there can be a considerable delay in cancelling or reducing the amount of the working capital allocated to cover the credit card spending, so that part of the working capital cannot be used for any purpose. The present invention may allow this problem to be reduced or overcome.

Where different accounts owned by the same or different companies are being handled by a single transaction system 1, or by different transaction systems 1 operated by a single bank, transactions between these different accounts can be carried out internally within the transaction system 1, or the transactions systems 1 of the bank, without the involvement of external financial institutions. Such internal transactions can be made effectively instantaneous, without the time delays normally encountered in financial transfers.

The outbound pre-paid card payment processing module 46 provides an interface allowing credit to be placed on pre-paid credit cards. These pre-paid credit cards may be issued to company personnel in order to make necessary purchase or payments. For example, a plumbing company may issue pre-paid credit cards to plumbers working in the field so that they can use the pre-paid credit cards to pay for materials they require to carry out jobs.

The issuing of pre-paid credit cards may provide advantages over issuing credit cards to company personnel. The risk of fraudulent use may be reduced. Any requirement to set aside funds against possible future use of the credit cards may be avoided.

When personnel are provided with pre-paid credit cards, credit can be provided on an as needed basis for specific purchases in real time. When a user who has been provided with a pre-paid credit card needs to make a payment the user can call a pre-paid credit request interface of the outbound pre-paid card payment processing module 46 of the system 1 and request that the necessary credit to make the payment should be pre-paid to their pre-paid credit.

This call can be made from a mobile device of the user, such as a mobile phone. For example, a plumber working in the field could determine the cost of the materials they require to carry out a job, and then request pre-payment of the necessary credit amount to make pay for these materials.

The pre-paid credit request interface of the outbound pre-paid credit card payment processing module 46 includes an automated speech recognition system which allows the user to make the request for pre-paid credit. The identity of the user making the request is verified by the voice biometric verification module 6 as discussed above before the requested pre-paid credit is paid onto the pre-paid credit card by the pre-paid card payment processing module 46. The user verification is made using a call originating from the system 1, and not using the request call made from the user mobile device.

The outbound mobile payment processing module 44 provides a pre-paid mobile credit request interface allowing pre-paid credit to be placed on mobile devices such as smartphones. This pre-paid credit may be used to make mobile payments by company personnel making necessary purchase or payments in a similar manner to that described above for a pre-paid credit card.

The user mobile device 11 has a mobile payment application arranged to cooperate with the pre-paid mobile credit request interface. Where the user wishes to request payment of pre-paid credit to their mobile device the request can be made from the mobile device to which the pre-paid credit is to be sent. The request is made by text entry into a credit request form displayed on the user mobile device 11, and the completed form is sent by the user mobile device 11 to the pre-paid mobile credit request interface of the outbound mobile payment processing module 44 through the communications module 7.

The user mobile device 11 includes a position determining means. An example of a suitable position determining means is the Global Positioning System (GPS), other position determining means are known.

When the request for credit is received the identity of the requesting user is verified by the voice biometric verification module 6 using a call to the user mobile device 11 originating at the system 1 as discussed above. When the identity verification call is made the voice biometric verification module 6 also requests the current determined position of the mobile device 11 from the application on the mobile device 11. The application obtains the current determined position of the mobile device 11 from the position determining means of the mobile device 11 and sends this position data to the voice biometric verification module 6.

In addition to verifying the identity of the user and confirming that the user is authorized to request the amount of pre-paid credit requested, the voice biometric verification module 6 compares the determined position of the mobile device 11 to a predetermined schedule of acceptable locations, and payment of the requested pre-paid credit is only processed and sent if the determined location of the mobile device 11 is an acceptable location. In the illustrated example the acceptable location must be the country of operation of the company holding the account. In other examples different acceptable locations may be used.

In other examples, when a voice biometric verification of user identity is made for any purpose, the voice biometric verification module 6 may obtain the current determined position of the mobile device used to carry out the identity verification from a position determining means of the mobile device.

In other examples a separate position determining means, such as a GPS device, may be used to provide the current determined position of the requesting user to the voice biometric verification module 6 for validation purposes. This may allow position data to be taken into account during verification when the mobile device used to carry out the verification does not include any position determining means.

Confirming the location of the mobile device may make it harder to fool the system.

The issuing of pre-paid credit cards or issue of pre-paid credit to mobile devices may provide advantages over issuing credit cards to company personnel. The risk of fraudulent use may be reduced. Any requirement to set aside funds against possible future use of the credit cards may be avoided.

In one example of the operation of the transaction processing system 1, a user with a mobile device 11 provides a prospective customer of the company with an estimate of the cost to do a job. This estimate may be provided in the form of a PDF electronic document. For example, a where the user is a plumber working in the field they could provide a cost estimate to a householder wishing to have plumbing work carried out, and provide the estimate to the customer as a PDF generated by the users smartphone.

When the prospective customer has accepted the estimate the user determines the cost of the materials they require to carry out a job and requests the payment of sufficient pre-paid credit to purchase any necessary materials using the application on his mobile device 11, as discussed above. For the example of the plumber above, when the householder has accepted the estimate the plumber can determine the cost of the materials they require to carry out a job and request the payment of sufficient pre-paid credit. In some examples the application on the mobile device may assist the user by calculating the cost of required materials identified by the user and automatically including these costs in both the estimate and the request for pre-paid credit.

Once the job has been completed the user can request payment from the customer. In some examples the customer can pay using the application on the user mobile device 11. In some examples the customer may make a credit card payment or a mobile payment throygh the user mobile device 11.

In other examples the system 1 may be able to use the voice biometric verification module 6 to record biometric signatures of the customer so that customer agreements can be biometrically signed. For example, acceptance of the estimate by the customer and/or a customer agreement to pay by signing a credit agreement may be biometrically signed using the customers voice.

The system may other forms of payment to those mentioned above to be authorised. For example the system may allow the acceptance of credit agreements. For example the system may authorize the withdrawal of cash from an Automated Teller Machine (ATM).

In other examples different forms of biometric identity verification may be used.

In some examples the location based verification may not be used.

In the above examples a mobile device is used to carry out the user verification. In other examples communication devices which are not mobile devices may be used. In one example the communication device may be a land line telephone. In one example the communication device may be a fixed financial services terminal.

The transaction system 1 is provided by a programmable general purpose computer with the different modules being provided by suitable software elements. In other examples some or all of the modules may be provided by dedicated processing hardware.

The apparatus described above may be implemented at least in part in software. Those skilled in the art will appreciate that the apparatus described above may be implemented using general purpose computer equipment or using bespoke equipment.

The hardware elements, operating systems and programming languages of such computers are conventional in nature, and it is presumed that those skilled in the art are adequately familiar therewith. Of course, the server functions may be implemented in a distributed fashion on a number of similar platforms, to distribute the processing load.

Here, aspects of the methods and apparatuses described herein can be executed on a computing device such as a server. Program aspects of the technology can be thought of as "products" or "articles of manufacture" typically in the form of executable code and/or associated data that is carried on or embodied in a type of machine readable medium. "Storage" type media include any or all of the memory of the computers, processors or the like, or associated modules thereof, such as various semiconductor memories, tape drives, disk drives, and the like, which may provide storage at any time for the software programming. All or portions of the software may at times be communicated through the Internet or various other telecommunications networks. Such communications, for example, may enable loading of the software from one computer or processor into another computer or processor. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible non-transitory "storage" media, terms such as computer or machine "readable medium" refer to any medium that participates in providing instructions to a processor for execution.

Hence, a machine readable medium may take many forms, including but not limited to, a tangible storage carrier, a carrier wave medium or physical transaction medium. Non-volatile storage media include, for example, optical or magnetic disks, such as any of the storage devices in computer(s) or the like, such as may be used to implement the encoder, the decoder, etc. shown in the drawings. Volatile storage media include dynamic memory, such as the main memory of a computer platform. Tangible transmission media include coaxial cables; copper wire and fiber optics, including the wires that comprise the bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards, paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will appreciate that while the foregoing has described what are considered to be the best mode and, where appropriate, other modes of performing the invention, the invention should not be limited to specific apparatus configurations or method steps disclosed in this description of the preferred embodiment. It is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings. Those skilled in the art will recognize that the invention has a broad range of applications, and that the embodiments may take a wide range of modifications without departing from the inventive concept as defined in the appended claims.

Although the present invention has been described in terms of specific exemplary embodiments, it will be appreciated that various modifications, alterations and/or combinations of features disclosed herein will be apparent to those skilled in the art without departing from the spirit and scope of the invention as set forth in the following claims.

## Claims

1. An electronic transaction processing system comprising:
an inbound payment processing module;
an outbound payment processing module;
an authorization module;
a data store containing financial account data relating to an entity;
wherein the authorization module is arranged to authorize processing of outbound payments by the outbound payment processing module;
the financial account data defines a currency amount corresponding to working capital of the entity;
inbound payments processed by the inbound payment processing module are added to said currency amount; and
authorized outbound payments processed by the outbound payment processing module are removed from said currency amount
wherein the authorization module comprises a voice biometric identity verification module, and the authorization module is arranged to authorize processing of an instructed outbound payment when the identity of the user instructing the payment is verified by the voice biometric identity verification module.

2. The system of claim 1, wherein the currency amount corresponding to working capital is immediately available for outbound payments.

3. The system of claim 1 or claim 2, wherein the voice biometric identity verification module is arranged to identify a plurality of different users.

4. The system of claim 3, wherein the authorization module has a number of different user identities each stored in association with at least one of a plurality of different payment authority profile; and
the authorization module is arranged to authorize processing of an instructed outbound payment when the identity of the user instructing the payment is verified and the instructed outbound payment matches the payment authority profile associated with the verified user identity.

5. The system of any preceding claim, wherein the system is arranged to receive instructions to make an instructed outbound payment from at least one mobile device.

6. The system of claim 5, wherein the voice biometric identification module is arranged to receive voice biometric information from said at least one mobile device.

7. The system of claim 6, wherein the voice biometric identification module is arranged to request a user to provide voice biometric information from said at least one mobile device.

8. The system of claim 7, wherein, when the system receives instructions to make an instructed outbound payment from said at least one mobile device, the voice biometric identification module is arranged to place a call to said at least one mobile device, the call comprising a request for a user to provide voice biometric information using said at least one mobile device.

9. The system of claim 8, wherein the request for a user to provide voice biometric information comprises a phrase to be spoken by the user.

10. The system of claim 9, wherein the biometric identification module is arranged to only accept voice biometric information provided by a user as valid if the voice biometric information comprising the phrase spoken by the user is received within a predetermined time after said request is made.

11. The system of claim 9 or claim 10, wherein the phrase comprises a sequence of numbers to be spoken by the user.

12. The system of any one of claims 5 to 11, wherein the authorization module is arranged to receive location information from said at least one mobile device; and
the authorization module is arranged to authorize processing of an instructed outbound payment only when the location of said at least one mobile device is within a predetermined range of locations.

13. The system of any preceding claim, the system further comprising a currency exchange module;
wherein the financial account data defines a currency amount in a specific currency; the currency exchange module is arranged to convert inbound payments in another currency into said specific currency before they are added to the said currency amount; and
the currency exchange module is arranged to convert outbound payments in another currency into said specific currency before they are subtracted from the said currency amount.

14. The system of any preceding claim, wherein the outbound payment processing module comprises an outbound pre-paid transaction card payment processing module arranged to process payments made using pre-paid transaction cards issued by the entity; and
the system further comprising a pre-paid transaction card interface arranged to set payment limits for the pre-paid transaction cards issued by the entity.

15. A method of electronically processing transactions, the method comprising:
maintaining a record of financial account data relating to an entity in a data store using a data storage module;
processing inbound payments using an inbound payment module;
processing outbound payments using an outbound payment module; and
authorizing the processing of outbound payments by the outbound payment module using an authorization module;
wherein the financial account data defines a currency amount corresponding to working capital of the entity;
inbound payments processed by the inbound payment processing module are added to said currency amount by the data storage module; and
authorized outbound payments processed by the outbound payment processing module are removed from said currency amount by the data storage module;
wherein the processing of an instructed outbound payment is authorized when the identity of the user instructing the payment is verified by a voice biometric identity verification module of the authorization module.
